# EUROPÄISCHE PATENTSCHRIFT

(11) **EP 1 062 460 B1**
(45) Veröffentlichungstag und Bekanntmachung des Hinweises auf die Patenterteilung: **11.02.2004**
(21) Anmeldenummer: 99913244.2
(22) Anmeldetag: 09.03.1999
(51) Int. Cl.: F21V 8/00

(54) **BELEUCHTUNGSSYSTEM ZUR AUSLEUCHTUNG EINES BEOBACHTUNGSRAUMS**
LIGHTING SYSTEM USED FOR LIGHTING AN OBSERVATION SPACE
SYSTEME D'ECLAIRAGE UTILISE POUR ECLAIRER UN ESPACE D'OBSERVATION

(30) Priorität: 10.03.1998 DE 19810184
(43) Veröffentlichungstag der Anmeldung: 27.12.2000
(73) Patentinhaber: Storz Endoskop GmbH, 8200 Schaffhausen (CH)
(72) Erfinder: KUSTER, Manfred, CH-8200 Schaffhausen (CH); HAAN, Harald, CH-8200 Schaffhausen (CH); KRATTIGER, Beat, CH-8222 Beringen (CH); NOVAK, Pavel, CH-8200 Schaffhausen (CH)
(74) Vertreter: Heuckeroth, Volker, Dr.
(86) Internationale Anmeldenummer: PCT/EP1999/001501
(87) Internationale Veröffentlichungsnummer: WO 1999/046536

(56) Entgegenhaltungen:
- EP-A- 0 533 987
- US-A- 3 051 035
- US-A- 4 408 827

## Beschreibung

Die Erfindung betrifft ein Beleuchtungssystem zur Ausbuchtung eines Beobachtungsraums, insbesondere eines Beobachtungsraums, in dem ein unter hohem Druck stehendes und/oder heißes Medium vorhanden ist, mit einem mit einem Ende an eine Lichtquelle anschließbaren Lichtleitkabel, und mit einem mit dem anderen Ende des Lichtleitkabels verbundenen Beleuchtungskopf, dessen distales Ende durch eine Öffnung in einer den Beobachtungsraum umgebenden Wand in den Beobachtungsraum einführbar ist.

Ein derartiges Beleuchtungssystem ist allgemein bekannt. Beleuchtungssysteme der eingangs genannten Art werden dazu verwendet, einen Beobachtungsraum, bspw. eine Reaktionskammer oder einen Brennraum, in dem chemische Reaktionen, Verbrennungsprozesse oder sonstige physikalische oder chemische Prozesse ablaufen, auszuleuchten, um den Prozeßablauf außerhalb des Beobachtungsraums bspw. in einer Bildwiedergabeeinheit darstellen zu können.

Ein spezieller Anwendungsfall eines derartigen Beleuchtungssystems ist die Ausleuchtung des Brennraums eines Verbrennungsmotors eines Kraftfahrzeuges. In der Motorenentwicklung und auch der Motorenüberprüfung wird ein solches Beleuchtungssystem zusammen mit einem Beobachtungssystem, bspw. einem technischen Endoskop, zur Darstellung der Kraftstoffeinspritzung und Gemischverteilung bei laufendem Motor verwendet. Da das Beobachtungssystem, d.h. das Endoskop, in der Regel ohne eigene Lichtzuführung arbeitet, ist es erforderlich, den Brennraum mit Hilfe des Beleuchtungssystems auszuleuchten, um die in dem Zylinder des Motors ablaufenden Gemischbildungsparozesse beobachten zu können, die nicht selbstleuchtend sind.

Dazu wird in die Zylinderkopfwand eine Öffnung, d.h. eine Bohrung eingebracht, durch die das vordere, d.h. distale Ende des Beleuchtungskopfes geführt wird, wobei die Öffnung, durch die der Beleuchtungskopf in den Brennraum eingeführt ist, gegen den Austritt von Verbrennungsgasen geeignet abgedichtet wird. Das Endoskop wird durch eine entsprechende zweite in den Zylinderkopf eingebrachte Bohrung zur Beobachtung des mittels des Beleuchtungssystems ausgeleuchteten Brennraumes eingeführt.

Der Beleuchtungskopf ist über ein Lichtleitkabel mit einer Lichtquelle verbunden, bspw. einer stroboskopischen Lichtquelle. Das von der Lichtquelle erzeugte Licht wird über das Lichtleitkabel bis zum Beleuchtungskopf geleitet, wo es am in den Brennraum eingeführten distalen Ende aus dem Beleuchtungskopf austritt. Zur Lichtübertragung von der Lichtquelle zum freien Ende des Beleuchtungskopfes weist das Lichtleitkabel Lichtleitfasern oder Lichtleitfaserbündel auf.

Bei den herkömmlichen Beleuchtungssystemen ist dieses Lichtleitfaserbündel bis zum distalen Ende des Beleuchtungskopfes geführt. Am distalen Ende sind die einzelnen Lichtleitfasern mittels eines Klebstoffes verkittet.

Ein derartiges Beleuchtungssystem weist jedoch Nachteile auf. Die Lichtleitfasern am distalen Ende des Beleuchtungskopfes dürfen nämlich nicht mit den Verbrennungsgasen im Brennraum des Motors in Berührung kommen, da die Lichtleitfasern selbst und auch ihre Verkittung weder druck- noch hochtemperaturbeständig sind. In dem Brennraum eines Motors herrschen allerdings während des Laufenlassens des Motors sehr hohe Drücke von über 100 bar sowie hohe Temperaturen, die 200°C übersteigen können. Um die Lichtleitfasern vor den hohen Temperaturen und den hohen Drücken zu schützen, müssen die herkömmlichen Beleuchtungssysteme daher mit einem becherförmigen Schutzglas verwendet werden, das in die Öffnung in der Wand des Brennraumes eingesetzt wird, und in das der Beleuchtungskopf eingeführt wird. Die Verwendung eines Schutzglases erfordert für dessen Einbau eine Bohrung im Zylinderkopf mit einem Durchmesser von 14 mm. Während eine Öffnung mit einem derartigen Durchmesser bei älteren Motoren kein Problem bereitete, kann eine Bohrung mit einem solchen Durchmesser jedoch bei den neuen Mehrventilmotoren aufgrund baulicher Gegebenheiten aus Platzgründen nicht mehr in dem Zylinderkopf eingebracht werden. Eine Gesamtverkleinerung der Anordnung aus Schutzglas und Beleuchtungskopf ist zwar möglich, jedoch wird dadurch die Lichtübertragungskapazität erheblich verringert und die Ausleuchtung des Beobachtungsraumes verschlechtert.

Darüber hinaus ist es bei den herkömmlichen Beleuchtungssystemen neben der Verwendung eines Schutzglases erforderlich, das distale Ende des Beleuchtungskopfes zusätzlich zu kühlen, da das Schutzglas zwar die direkte Berührung der Lichtleitfasern mit den Verbrennungsgasen verhindert, jedoch nicht das Eindringen von Wärmestrahlung. Die durch das Schutzglas durchgehende Wärmestrahlung setzt das distale Ende der Lichtleitfasern einer hohen Temperatur aus, wodurch diese und insbesondere die Verkittung der Fasern beschädigt werden. Daher benötigen die herkömmlichen Beleuchtungssysteme zusätzlich einen Kühlkreislauf mit Zu- und Ableitung im Beleuchtungskopf, die einen Großteil des Querschnittes des Beleuchtungskopfes beanspruchen, so daß für die Lichtleitfasern nur ein kleiner Querschnitt von etwa 3,5 mm Durchmesser übrig bleibt, während der effektive Außendurchmesser des Beleuchtungskopfes etwa 7,5 mm beträgt, so daß die theoretische Lichtübertragungskapazität des Beleuchtungskopfes schlecht ausgenutzt ist. Dabei besteht zusätzlich die Gefahr, daß im Falle eines Ausfalls der Kühlung die Lichtleitfasern am distalen Ende des Beleuchtungskopfes und damit das gesamte Beleuchtungssystem zerstört werden.

Aus dem Dokument US-A-4 408 827 ist eine optische Sonde zum Sammeln von Licht aus einem definierten Bereich in einer Hochtemperaturumgebung bekannt, die ein Paar gekrümmter Oberflächen und eine reflektierende Oberfläche aufweist, um Licht aus dem definierten Bereich in eine optische Faser einzukoppeln. Diese optische Sonde weist ein mit einem Ende an eine Lichtquelle anschließbares Lichtkabel und ein mit dem anderen Ende des Lichtleitkabels verbundenes optisches Kopfteil auf, dessen distales Ende durch eine Öffnung in einer den Beobachtungsraum umgebenden Wand in den Beobachtungsraum einführbar ist. Der optische Kopfteil der Sonde weist einen Lichtleitstab mit den gekrümmten und reflektierenden Oberflächen auf, wobei der Lichtleitstab an einem proximalen Ende eine Kopplungshülse zum Verbinden des Lichtleitstabes mit dem Lichtleitkabel aufweist.

Aus dem Dokument US-A-3 051 035 ist ein Pyroskop bekannt, das zur Flammenanalyse in Brennräumen, beispielsweise in Flugzeugturbinen, verwendet wird. Das Pyroskop weist am brennraumseitigen Ende einen Lichtleitstab aus Quarzglas auf. An den Lichtleitstab schließt sich ein flexibles Lichtfaserbündel an, wobei der Lichtleitstab und das Lichtfaserbündel über eine Kopplungshülse miteinander verbunden sind. Der Lichtleitstab ist mit seinem den Brennraum abgewandten Ende in der Kopplungshülse mit einem wärmebeständigen Klebstoff befestigt, der einen hermetisch dichten Abschluss zwischen dem Lichtleitstab und der Kopplungshülse bewirken soll. Als Klebstoff wird ein Sauereisen-Zement verwendet, der nicht dazu neigt, den Quarzglasstab zu benetzen. Dieser Klebstoff soll eine Wärmeübertragung zwischen dem Lichtleitstab und der Kopplungshülse ermöglichen.

Der Erfindung liegt die Aufgabe zugrunde, ein Beleuchtungssystem der eingangs genannten Art dahingehend weiterzubilden, dass die vorstehend genannten Nachteile vermieden werden, indem das Beleuchtungssystem ohne Schutzglas und ohne Kühlung verwendet werden kann, und das Licht möglichst ohne Intensitätsverluste in den Beobachtungsraum geleitet werden kann.

Erfindungsgemäß wird diese Aufgabe durch Bereitstellung eines Beleuchtungssystems zur Ausleuchtung eines Beobachtungsraums, insbesondere eines Beobachtungsraums, in dem ein unter hohem Druck stehendes und/oder heißes Medium vorhanden ist, gelöst, das ein mit einem Ende an einer Lichtquelle anschließbares Lichtleitkabel und einen mit dem anderen Ende des Lichtleitkabels verbundenen Beleuchtungskopf aufweist, dessen distales Ende durch eine Öffnung in einer den Beobachtungsraum umgebenden Wand in den Beobachtungsraum einführbar ist, wobei der Beleuchtungskopf einen Lichtleitstab aus einem druck- und/oder temperaturbeständigen Material aufweist, wobei der Lichtleitstab an einem proximalen Ende eine Kopplungshülse zum Verbinden des Lichtleitstabes mit dem Lichtleitkabel aufweist, wobei die Kopplungshülse an dem Lichtleitstab mittels eines Klebstoffes befestigt ist, wobei der Klebstoff einen Brechungsindex aufweist, der kleiner ist als der Brechungsindex des Lichtleitstabes, und wobei der Klebstoff zumindest in Nähe der Oberfläche des Lichtleitstabes transparent ist.

Bei dem erfindungsgemäßen Beleuchtungssystem ist demnach das Lichtleitfaserbündel des Lichtleitkabels nicht mehr bis zum distalen Ende des Beleuchtungskopfes geführt, sondern am Beleuchtungskopf durch einen Lichtleitstab aus einem druckund/oder temperaturbeständigen Material ersetzt. Die empfindlichen Lichtleiterfasern befinden sich somit außerhalb des Beobachtungsraums und sind somit nicht mehr den schädigenden Einflüssen von Druck und Temperatur ausgesetzt. Ein Lichtleitstab hat den Vorteil, an seinem in den Beobachtungsraum ragenden distalen Ende keine Klebstellen oder Verkittungen aufzuweisen, die sich unter Einwirkung von Druck oder hoher Temperatur lösen können. Dadurch, daß der Beleuchtungskopf einen Lichtleitstab aus einem druck- und/oder hochtemperaturbeständigen Material aufweist, ist weder ein Schutzglas noch eine Kühlung des Beleuchtungskopfes erforderlich. Der Lichtleitstab, der aus einem geeigneten transparenten Glas bestehen kann, kann mit den Verbrennungsgasen im Brennraum eines Verbrennungsmotors in Berührung kommen, ohne dadurch beschädigt zu werden. Dadurch, daß kein Schutzglas zum Schutz des Beleuchtungskopfes mehr erforderlich ist, kann die Öffnung in der Wand des Beobachtungsraumes im Durchmesser verkleinert werden, bspw. auf einem Durchmesser von 10 mm, so daß das erfindungsgemäße Beleuchtungssystem auch bei modernen Mehrventilmotoren verwendet werden kann, bei denen eine Bohrung mit einem größeren Durchmesser nicht eingebracht werden könnte. Zur Verkleinerung des Durchmessers der Öffnung bedarf es bei dem erfindungsgemäßen Beleuchtungssystem keiner die Lichtübertragungskapazität verringernden Herunterskalierung des Beleuchtungskopfes. Während bei den herkömmlichen Beleuchtungssystemen wegen der erforderlichen Kühlung Kühlkanäle am Beleuchtungskopf vorgesehen sind, die den zur Lichtübertragung nutzbaren Querschnitt des Beleuchtungskopfes stark reduzieren, besteht bei dem erfindungsgemäßen Beleuchtungssystem ein weiterer Vorteil darin, daß der gesamte Querschnitt des Lichtleitstabes zur Lichtübertragung genutzt werden kann, wodurch die Lichtübertragungskapazität des erfindungsgemäßen Beleuchtungssystems gegenüber den herkömmlichen Beleuchtungssystemen wesentlich erhöht ist. Der Lichtleitstab kann somit den gleichen Durchmesser wie das Lichtleitfaserbündel im Lichtleitkabel aufweisen. Während bei den herkömmlichen Beleuchtungssystemen für die Lichtfasern im Beleuchtungskopf nur ein Querschnitt mit einem Durchmesser von etwa 3,5 mm zur Verfügung steht, kann der Lichtleitstab des erfindungsgemäßen Beleuchtungssystems mit einem Durchmesser von über 6 mm ausgebildet werden, wodurch sich die Lichtausbeute gegenüber den herkömmlichen Beleuchtungssystemen vervierfacht. Als Materialien für den Lichtleitstab eignen sich prinzipiell alle hitzebeständigen Gläser mit hoher Transparenz.

Dadurch, dass der Lichtleitstab an seinem proximalen Ende eine Kopplungshülse zum Verbinden des Lichtleitstabes mit dem Lichtleitkabel aufweist, besteht der Vorteil, daß mit der Kopplungshülse eine leicht zu handhabende lösbare Verbindung des Lichtleitstabes mit dem Lichtleitkabel hergestellt wird. Wenn mehrere Lichtleitstäbe für unterschiedliche Beleuchtungsrichtungen für das erfindungsgemäße Beleuchtungssystem vorgesehen sind, trägt jeder Lichtleitstab an seinem proximalen Ende eine entsprechende Kopplungshülse, so daß ein rasches Auswechseln der verschiedenen Lichtleitstäbe ermöglicht wird.

Weiterhin ist die Kopplungshülse an dem Lichtleitstab mittels eines Klebstoffes befestigt, wobei der Klebstoff einen Brechungsindex aufweist, der kleiner ist als der Brechungsindex des Lichtleitstabes.

Da die Kopplungshülse bevorzugt aus Metall besteht, kann die Kopplungshülse durch Kleben am sichersten an dem Lichtleitstab befestigt werden. Da sich die Klebstelle zwischen der Kopplungshülse und dem proximalen Ende des Lichtleitstabes während des Betriebs außerhalb des Beobachtungsraumes befindet, ist diese Klebstelle nicht den im Beobachtungsraum möglicherweise herrschenden extremen Temperaturen, sondern niedrigeren Temperaturen ausgesetzt, so daß nicht die Gefahr besteht, daß sich die Verklebung aufgrund von Hitzeeinwirkung löst. Dadurch, daß der Klebstoff einen Brechungsindex aufweist, der kleiner ist als der Brechungsindex des Lichtleitstabes, werden Verluste bei der Lichtübertragung durch den Lichtleitstab im Bereich der Kopplungshülse vermieden. Die für die Lichtleitung in dem Lichtleitstab erforderliche Totalreflexion des in dem Lichtleitstab geleiteten Lichtes an der Oberfläche des Lichtleitstabes bleibt durch die Verwendung eines Klebstoffes mit einem Brechungsindex, der kleiner ist als der Brechungsindex des Lichtleitstabes, erhalten. Somit wird auf vorteilhafte Weise einerseits eine sichere Befestigung der Kopplungshülse an dem Lichtleitstab erreicht, ohne daß an der Verbindungsstelle zwischen der Kopplungshülse und dem Lichtleitstab Lichtverluste auftreten. Es könnte aber auch vorgesehen sein, die Kopplungshülse auf den Lichtleitstab mittels eines Metall-Glas-Lötverfahrens aufzulöten.

Des weiteren ist der Klebstoff zumindest in Nähe der Oberfläche des Lichtleitstabes transparent.

Dadurch, daß der Klebstoff zumindest in Nähe der Oberfläche des Lichtleitstabes transparent ist, wird vermieden, daß ein Teil des Lichtes am Übergang zwischen der Oberfläche des Lichtleitstabes und dem Klebstoff von diesem absorbiert wird. Die gesamte in dem Lichtleitstab geleitete Lichtintensität wird somit durch Totalreflexion bis zum distalen Ende des Lichtleitstabes übertragen.

In einer bevorzugten Ausgestaltung ist der Lichtleitstab lösbar mit dem Lichtleitkabel verbunden.

Diese Maßnahme hat nun den Vorteil, daß der Lichtleitstab auswechselbar ist. Während bei den herkömmlichen Beleuchtungssystemen bei einer Beschädigung der bis zum distalen Ende des Beleuchtungskopfes durchgeführten Lichtleitfasern das gesamte Beleuchtungssystem unbrauchbar geworden ist, ist nun erfindungsgemäß vorgesehen, den Beleuchtungskopf lösbar mit dem Lichtleitkabel zu verbinden. Der kostengünstige Lichtleitstab kann im Falle einer Beschädigung, bspw. durch Schlageinwirkung, ausgewechselt werden, während das teure und temperaturempfindliche Lichtleitkabel nach Verbindung mit einem neuen Beleuchtungskopf weiter verwendet werden kann. Dadurch werden die Kosten der Instandhaltung des erfindungs gemäßen Beleuchungssystems verringert. Ein weiterer Vorteil der lösbaren Verbindung des Lichtleitstabes mit dem Lichtleitkabel besteht darin, daß ein Satz von austauschbaren Lichtleitstäben vorgesehen werden kann, die bspw. für unterschiedliche Beleuchtungsrichtungen vorgesehen sind. Das erfindungsgemäße Beleuchtungssystem weist somit einen vorteilhaften modularen Aufbau auf. Demgegenüber war es bei den herkömmlichen Beleuchtungssystemen erforderlich, für jede Beleuchtungsrichtung ein separates komplettes Beleuchtungssystem bereitzuhalten, womit entsprechend hohe Kosten verbunden sind.

In einer weiteren bevorzugten Ausgestaltung ist der Klebstoff hochtemperaturbeständig.

Diese Maßnahme hat den Vorteil, daß, falls es zu einer Wärmeübertragung durch Metallteile am Beleuchtungskopf auf den Klebstoff kommt, dieser nicht aufgrund der Wärmeeinwirkung seine Adhäsionseigenschaft verliert und sich die Verbindung zwischen dem Lichtleitstab und der Kopplungshülse nicht lösen kann.

In einer weiteren bevorzugten Ausgestaltung ist der Klebstoff auf der Basis von Silikon aufgebaut.

Die Verwendung eines Klebstoffes auf der Basis von Silikon hat den Vorteil, daß Silikon einerseits einen geringeren Brechungsindex als Glas aufweist, und Silikon andererseits hochtemperaturbeständig ist. Ein weiterer Vorteil besteht darin, daß auf der Basis von Silikon ein transparenter Klebstoff hergestellt werden kann. Ein weiterer Vorteil eines Klebstoffes auf der Basis von Silikon besteht darin, daß der Klebstoff kostengünstig hergestellt werden kann.

In einer weiteren bevorzugten Ausgestaltung umgibt die Kopplungshülse den Lichtleitstab bis etwa zum distalen Ende desselben.

Diese Maßnahme hat den Vorteil, daß der Lichtleitstab durch die Kopplungshülse gegen Schlageinwirkung geschützt wird. Dadurch werden Ausbrüche an der Oberfläche des Lichtleitstabes, die seine Lichtleitfähigkeit durch Aufhebung der Totalreflexion aufgrund von Oberflächenunregelmäßigkeiten beeinträchtigen können, vermieden.

In einer weiteren bevorzugten Ausgestaltung ist in der Kopplungshülse eine Auflagefläche ausgebildet, an der sich das proximale Ende des Lichtleitstabes in axialer Richtung abstützt.

Diese Maßnahme hat den Vorteil, daß sich der Lichtleitstab unter Wirkung des in dem Beobachtungsraum herrschenden hohen Druckes axial nicht nach proximal verschieben kann, wodurch vermieden wird, daß der Lichtleitstab gegen das distale Ende der Lichtleitfasern gedrückt wird und diese beschädigt.

In einer weiteren bevorzugten Ausgestaltung ist der Lichtleitstab zumindest teilweise an seiner Oberfläche metallisiert.

Diese Maßnahme hat den Vorteil, daß mittels der Metallisierung an der Oberfläche des Lichtleitstabes eine Optimierung der Lichtverteilung des aus dem distalen Ende des Lichtleitstabes austretenden Lichtes erzielt werden kann, insbesondere wenn die Metallisierung am distalen Ende des Lichtleitstabes vorgesehen ist. Die Metallisierung wirkt als Spiegel, die eine Auskopplung des Lichtes aus dem distalen Ende des Lichtleitkabels in einer gewünschten Richtung ermöglicht.

Dabei ist es bevorzugt, wenn die Metallisierung aus einem Metall gebildet wird, das hochtemperaturbeständig ist, und/oder daß die Metallisierung mit einer Schutzschicht überzogen ist.

Diese Maßnahme hat den Vorteil, daß die Metallisierung durch Einwirkung der in dem Beobachtungsraum ggf. herrschenden hohen Temperaturen nicht beschädigt werden kann.

In einer weiteren bevorzugten Ausgestaltung weist der Lichtleitstab am distalen Ende eine plane oder gekrümmte Schliffläche auf.

Diese Maßnahme hat den Vorteil, daß die Lichtverteilung des aus dem distalen Ende des Lichtleitstabes austretenden Lichtes in gewünschter weise beeinflußt werden kann, ohne daß dazu Metallisierungen erforderlich sind, die den hohen Temperaturen im Beobachtungsraum unter Umständen nicht standhalten können.

Dabei ist es bevorzugt, wenn die Schliffläche plan ist und mit einer Mantellinie des Lichtleitstabes einen Scheitelwinkel im Bereich zwischen 20 und 90° bildet.

Diese Maßnahme hat den Vorteil, daß mit einer schrägen planen Schliffläche ein nahezu punktförmiger Lichtaustritt am Scheitel der Schliffläche erreicht werden kann. Dadurch wird der weitere Vorteil erzielt, daß die zur Ausleuchtung des Beobachtungsraumes notwendige Eindringtiefe des distalen Endes des Lichtleitstabes in den Beobachtungsraum minimiert werden kann. Dadurch wiederum können störende Einflüsse auf die in dem Beobachtungsraum ablaufenden Prozesse und die thermische Belastung der Spitze des Lichtleitstabes ebenfalls vorteilhaft minimiert werden.

In einer weiteren bevorzugten Ausgestaltung besteht der Lichtleitstab aus einem thermisch isolierenden Material.

Diese Maßnahme hat den Vorteil, daß von dem Lichtleitstab keine oder nur wenig Wärme aus dem Beobachtungsraum nach proximal geleitet wird, wodurch temperaturempfindliche Teile des Beleuchtungssystems, die sich außerhalb des Brennraumes befinden, wie bspw. das distale Ende der Lichtleitfasern, nicht durch Hitzeeinwirkung beeinträchtigt werden.

In einer weiteren bevorzugten Ausgestaltung besteht der Lichtleitstab aus Quarzglas.

Quarzglas hat einerseits den Vorteil, hochtransparent zu sein, so daß das Licht mit hoher Übertragungskapazität in den Beobachtungsraum geleitet werden kann. Ein weiterer Vorteil von Quarzglas besteht darin, daß er thermisch isolierend ist. Außerdem hat Quarzglas einen kleinen Temperaturausdehnungskoeffizienten, so daß durch das große Temperaturgefälle zwischen dem in den Beobachtungsraum eingeführten distalen Ende des Lichtleitstabes und dem außerhalb des Beobachtungsraumes liegenden proximalen Ende keine kritischen Spannungen in dem Lichtleitstab auftreten. Quarzglas weist darüber hinaus den Vorteil auf, daß es über das gesamte optische Spektrum von infrarot bis ultraviolett transparent ist, wodurch sich das erfindungsgemäße Beleuchtungssystem auch für spektroskopische Anwendungen anbietet.

In einer weiteren bevorzugten Ausgestaltung ist zwischen dem Beleuchtungskopf und dem Lichtleitkabel ein starres, als Schaft ausgebildetes Distanzstück angeordnet, wobei der Lichtleitstab lösbar mit dem Distanzstück verbunden ist.

Durch diese Maßnahme wird der Vorteil erzielt, daß sich der Beleuchtungskopf bedienungsfreundlich in die Öffnung in der Wand des Beobachtungsraumes einführen läßt. Das Distanzstück ist dazu bevorzugt so bemessen, daß das Distanzstück Bauteile außerhalb des Beobachtungsraumes, bspw. Zu- und Ableitungen eines Verbrennungsmotors, überragt. Dadurch, daß der Lichtleitstab lösbar an dem Distanzstück fixiert ist, kann der Lichtleitstab vor dem Einführen in die Öffnung des Beobachtungsraumes an dem Distanzstück vormontiert und dadurch mit dem Lichtleitkabel verbunden werden.

Dabei ist bevorzugt, wenn ein Einsatz vorgesehen ist, der außerhalb des Beobachtungsraums in der Öffnung in der Wand des Beobachtungsraums fixiert werden kann, wobei das Distanzstück in den Einsatz einschiebbar ist und mit einem Befestigungselement am proximalen Ende des Einsatzes fixierbar ist.

Durch diese Maßnahme wird im Zusammenhang mit der vorhergehenden Maßnahme die Bedienungsfreundlichkeit des erfindungsgemäßen Beleuchtungssystems weiter verbessert. Der Einsatz kann zunächst in die Öffnung in der Wand des Beobachtungsraums eingesetzt und bspw. durch eine Gewindeverbindung in der Öffnung fixiert werden. Das mit dem Lichtleitkabel verbundene Distanzstück, an dem zuvor der Lichtleitstab, bspw. mittels der zuvor erwähnten Kopplungshülse, befestigt wird, wird dann in den Einsatz eingeschoben und mit dem Befestigungselement am proximalen Ende des Einsatzes fixiert. Die Fixierung des Distanzstückes mittels des Befestigungselementes kann ungestört von Bauteilen, die außerhalb des Beobachtungsraumes vorgesehen sind, durchgeführt werden, da das Distanzstück eine entsprechende Beabstandung von der Wand des Beobachtungsraumes schafft.

Dabei ist es bevorzugt, wenn das Befestigungselement an dem Distanzstück unverlierbar gehalten ist.

Durch diese Maßnahme wird die Bedienungsfreundlichkeit des modulartig aufgebauten Beleuchtungssystems bei der Montage weiter verbessert.

In einer weiteren bevorzugten Ausgestaltung ist das Befestigungselement eine Überwurfmutter oder ein Bajonettring.

Eine Überwurfmutter oder ein Bajonettring stellen vorteilhaft konstruktiv einfache und leicht zu bedienende Befestigunaselemente dar.

In einer weiteren bevorzugten Ausgestaltung ist die Kopplungshülse mit dem distalen Ende des Distanzstückes verschraubbar.

Diese Maßnahme hat den Vorteil, daß sich der Lichtleitstab über die Kopplungshülse schnell und einfach mit dem Distanzstück und somit mit dem Lichtleitkabel verbinden läßt.

In einer weiteren bevorzugten Ausgestaltung ist das Beleuchtungssystem zur spektroskopischen Auskopplung von Licht aus dem Beobachtungsraum ausgelegt.

Diese Maßnahme hat den Vorteile daß mit dem erfindungsgemäßen Beleuchtungssystem nicht nur Licht in den Beobachtungsraum geleitet werden kann, sondern auch Licht aus dem Beobachtungsraum ausgekoppelt werden kann, das dann in einer Spektralanalyse untersucht werden kann. Dies bietet sich insbesondere bei der Untersuchung von Verbrennungsprozessen an, bspw. zur spektroskopischen Untersuchung von Flammen in Brennkammern.

In einem bevorzugten Anwendungsfall wird das erfindungsgemäße Beleuchtungssystem zur Ausleuchtung eines Brennraumes eines Verbrennungsmotors und/oder zur spektroskopischen Auskopplung von Licht aus demselben verwendet.

In einer weiteren bevorzugten Anwendung wird das erfindungsgemäße Beleuchtungssystem zur Ausleuchtung eines Reaktionsgefäßes in der chemischen Industrie und/oder zur Auskopplung von Licht aus demselben verwendet.

In einem weiteren bevorzugten Anwendungsfall wird das erfindungsgemäße Beleuchtungssystem zur Ausleuchtung eines Reaktors eines Kernkraftwerkes verwendet.

Weitere Vorteile ergeben sich aus der nachfolgenden Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird hiernach mit Bezug auf die Zeichnung näher beschrieben. Es zeigen:
- Fig. 1: ein erfindungsgemäßes Beleuchtungssystem zur Ausleuchtung eines Beobachtungsraumes;
- Fig. 2: einen Längsschnitt durch das distale Ende des Beleuchtungssystems in Fig. 1 entlang der Linie II-II in Fig. 1;
- Fig. 3: einen Längsschnitt durch einen Beleuchtungskopf des Beleuchtungssystems in einem Fig. 2 entsprechenden Längsschnitt;
- Fig. 4: ein weiteres Ausführungsbeispiel eines Beleuchtungskopfes zur Verwendung in dem Beleuchtungssystem in Fig. 1 und 2 im Längsschnitt;
- Fig. 5: ein weiteres Ausführungsbeispiel eines Beleuchtungskopfes zur Verwendung in dem Beleuchtungssystem in Fig. 1 und 2, ebenfalls im Längsschnitt.

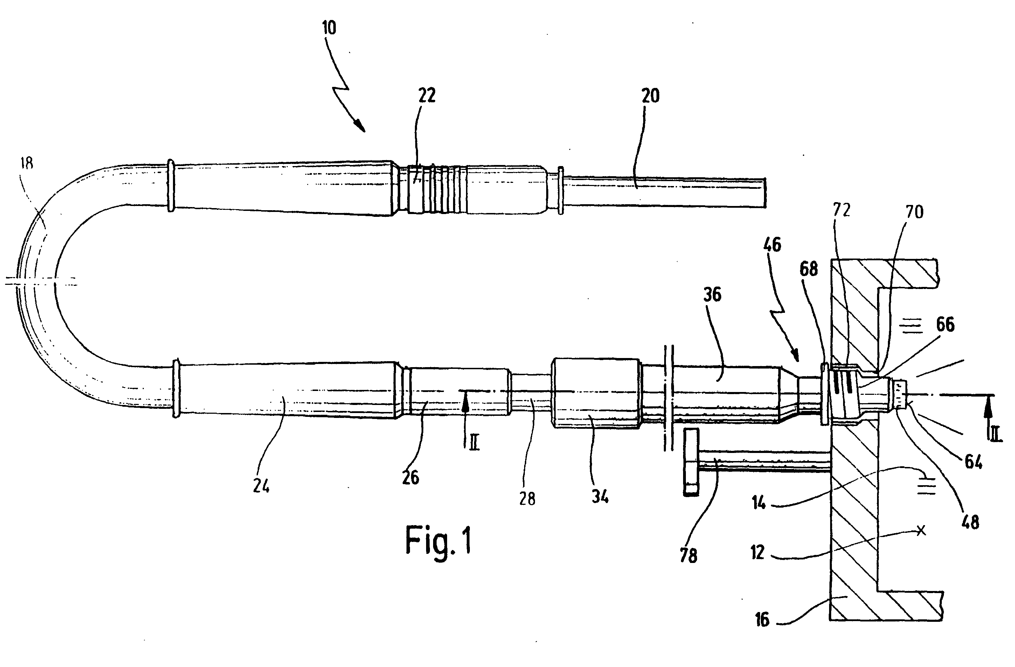

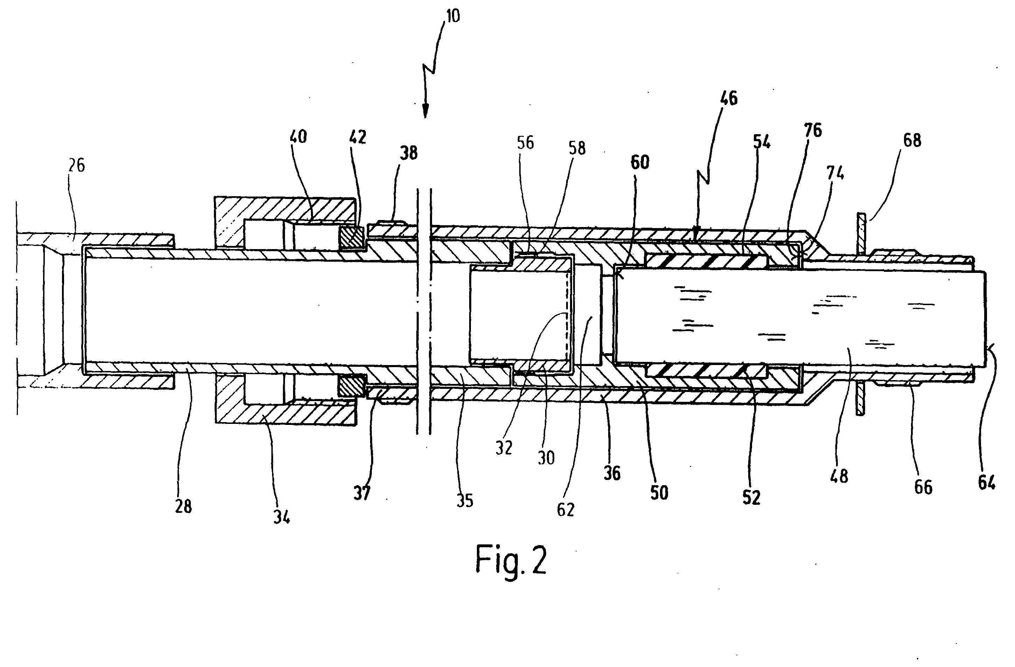

In Fig. 1 und 2 ist ein mit dem allgemeinen Bezugszeichen 10 versehenes Beleuchtungssystem dargestellt, das zur Ausleuchtung eines Beobachtungsraumes 12 verwendet wird. In dem Beobachtungsraum 12 ist ein unter hohem Druck stehendes und/oder heißes Medium 14 vorhanden. Der Beobachtungsraum 12 ist bspw. der Brennraum eines Verbrennungsmotors, der von einer Wand 16, d.h. einem Gehäuse, geschlossen umgeben ist. Die Wand 16 stellt dabei das Zylinderkopfgehäuse dar. In Fig. 2 ist die Wand 16 nicht dargestellt.

Das Beleuchtungssystem 10 weist ein Lichtleitkabel 18 auf. Das Lichtleitkabel 18 ist flexibel. An seinem proximalen Ende weist das Lichtleitkabel 18 einen Stecker 20 auf, mit dem das Lichtleitkabel 18 an eine nicht dargestellte Lichtquelle anschließbar ist. Der Stecker 20 ist über ein Steckergehäuse 22 mit dem Lichtleitkabel 18 fest verbunden. Das Lichtleitkabel 18 ist etwa 1,5 m bis 2,5 m lang.

In dem Lichtleitkabel 18 verlaufen nicht dargestellte Lichtleitfasern oder Lichtleitfaserbündel mit einem Gesamtquerschnitt von etwa 6 mm Durchmesser. Am distalen Ende weist das Lichtleitkabel 18 eine Kunststoffhülse 24 auf, die mit einer Metallhülse 26 fest verbunden ist.

Mit der Metallhülse 26 ist ein starres, als Schaft ausgebildetes rohrförmiges Distanzstück 28 fest verbunden. Am distalen Ende des Distanzstückes 28 ist eine weitere Metallhülse 30 angeordnet und mit dem distalen Ende des Distanzstückes 28 fest verbunden. Die in dem Lichtleitkabel 18 verlaufenden Lichtleitfasern bzw. Lichtleitfaserbündel sind durch das Distanzstück 28 durchgeführt und enden in der Metallhülse 30 an deren distalem Ende, wobei die Endfläche der Lichtleitfasern mit einer unterbrochenen Linie 32 angedeutet ist. Die Lichtleitfasern füllen dabei in etwa den gesamten Querschnitt der Metallhülse 30 mit einem Durchmesser von etwa 6 mm aus. Die Enden der Lichtleitfasern sind an der Linie 32 miteinander verkittet, geschliffen und hochglanzpoliert.

Um das Distanzstück 28 herum ist ein Befestigungselement 34 in Form einer Überwurfmutter angeordnet.

Das Distanzstück 28 ist mit seinem distalen Ende 35 in einen als Rohr ausgebildeten Einsatz 36 in dessen proximales Ende 37 eingeschoben. Das Distanzstück 28 wird mittels des Befestigungselementes 34 an dem Einsatz 36 fixiert. Dazu ist am proximalen Ende 37 des Einsatzes 36 ein Außengewinde 38 vorgesehen, während das Befestigungselement 34 ein entsprechendes Innengewinde 40 aufweist. In Fig. 1 ist ein Zustand dargestellt, in dem das Befestigungselement 34 mit dem Einsatz 36 verschraubt ist, während in Fig. 2 das Befestigungselement 34 von dem Einsatz 36 gelöst ist. Dementsprechend läßt sich das Distanzstück 28 bei von dem Einsatz 36 gemäß Fig. 2 abgeschraubten Befestigungselement 34 aus dem Einsatz 36 herausziehen.

Der Stecker 20, das Steckergehäuse 22, das Lichtleitkabel 18, das Distanzstück 28 und die Metallhülse 30 sowie das Befestigungselement 34 und die bis zur Linie 32 reichenden Lichtleitfasern bilden eine fest miteinander verbundene Baueinheit. Das Befestigungselement 34 ist dabei an dem Distanzstück 28 unverlierbar gehalten, indem das distale Ende der Metallhülse 26 einen proximalen Anschlag und ein ebenfalls fest mit dem Distanzstück 28 verbundener Ring 42 einen distalen Anschlag für das Befestigungselement 34 bildet. Der Ring 42 bewirkt außerdem eine axiale Führung des Befestigungselementes 34, das auf dem Distanzstück 28 im vom Einsatz 36 abgeschraubten Zustand axial verschiebbar ist.

Am distalen Ende des Beleuchtungssystems 10 ist ein Beleuchtungskopf 46 angeordnet.

Der Beleuchtungskopf 46 weist einen Lichtleitstab 48 aus einem druck- und/oder temperaturbeständigen Material auf, und zwar aus einem hochtransparenten Quarzglas. Der Lichtleitstab 48 ist ferner massiv zylindrisch ausgebildet. Der Lichtleitstab 48 ist außerdem thermisch isolierend, so daß das in den Beobachtungsraum 12 ragende distale Ende des Lichtleitstabes 48, das dementsprechend hohen Temperaturen ausgesetzt ist, keine oder nur wenig Wärme zum proximalen Ende hin überträgt.

An dem Lichtleitstab 48 ist eine Kopplungshülse 50 unlösbar befestigt. Die unlösbare Verbindung der Kopplungshülse 50 an dem Lichtleitstab 48 wird mittels eines Klebstoffes 52 bewerkstelligt, der in einer umfänglichen Ausnehmung in der Kopplungshülse 50 enthalten und ausgehärtet ist. Der Klebstoff 52 ist auf der Basis von Silikon hergestellt. Der Klebstoff 52 ist weiterhin hochtemperaturbeständig und transparent, zumindest in Nähe der Oberfläche des Lichtleitstabes 48. Ferner weist der Klebstoff 52 einen Brechungsindex auf, der kleiner ist als der Brechungsindex des Quarzglases des Lichtleitstabes 48.

An ihrem proximalen Ende weist die Kopplungshülse 50 ein Innengewinde 56 auf, das mit eine Außengewinde 58 an der Metallhülse 30 verschraubt ist. Der Lichtleitstab 48 ist somit mit dem Lichtleitkabel 18, das über das Distanzstück 28 mit der Metallhülse 30 fest verbunden ist, lösbar verbunden.

Die Kopplungshülse 50 weist ferner eine Auflagefläche 60 in Form einer in der Kopplungshülse 50 ausgebildeten Ringfläche auf, gegen die sich das proximale Ende des Lichtleitstabes 48 in axialer Richtung nach proximal abstützen kann.

Im zusammengesetzten Zustand ist das proximale Ende des Lichtleitstabes 48 von dem distalen Ende der Lichtleitfasern gemäß der Linie 32 geringfügig beabstandet. Um Reflexionsverluste an der proximalen Stirnfläche des Lichtleitstabes 48 bei der Einkopplung des Lichtes zu vermeiden, kann ein Zwischenraum 62 zwischen dem distalen Ende der Lichtleitfasern und dem proximalen Ende des Lichtleitstabes 48 mit einem optischen Koppelmedium, bspw. einem hochtransparenten Silikongummi, ausgefüllt sein. Es kann auch das Ende der Lichtleitfasern an der Linie 32 und/oder das distale stirnseitige Ende des Lichtleitstahes 48 mit einer dielektrischen Antireflexionsschicht versehen werden.

Am distalen Ende weist der Lichtleitstab 48 eine Schliffläche 64 auf. Die Schliffläche 64 ist plan, kann jedoch auch gekrümmt sein.

Der Einsatz 36 weist an seinem distalen Ende ein Außengewinde 66 auf. Am proximalen Ende des Gewindes 66 ist ferner ein fest mit dem Einsatz 36 verbundener Dichtring 68 angeordnet.

Im folgenden wird nun die Montage des Beleuchtungssystems 10 zur Ausleuchtung des Beobachtungsraumes 12 beschrieben.

Vor der Montage liegen folgende Baugruppen einzeln vor: Die erste Baugruppe wird durch das Lichtleitkabel 18 mit dem Stecker 20 und dem Distanzstück 28 mit der Metallhülse 30 gebildet, die wie bereits erwähnt, fest miteinander verbunden sind. Das Befestigungselement 34 ist ebenfalls an dieser Baugruppe, nämlich auf dem Distanzstück 28 lose, aber unverlierbar angeordnet. Die zweite Baugruppe wird durch den Beleuchtungskopf 46 gebildet, die den Lichtleitstab 48 und die daran befestigte Kopplungshülse 50 aufweist. Die dritte Baugruppe wird durch den Einsatz 36 gebildet.

Zunächst wird in die Wand 16 des Beobachtungsraumes 12 eine durchgehende Öffnung 70 gebohrt. In diese Öffnung 70 wird ein Gewinde 72 geschnitten.

Als nächstes wird der Beleuchtungskopf 46 mit dem Lichtleitkabel 18 verbunden, in dem die Kopplungshülse 50 auf die fest mit dem Distanzstück 28 verbundene Metallhülse 30 aufgeschraubt wird.

Als nächstes wird der Einsatz 36 mittels des Gewindes 66 in die Öffnung 70 geschraubt, wobei der Dichtring 68 für eine Abdichtung der Öffnung 70 sorgt. Der Einsatz 36 ist somit in der Öffnung 70 fixiert. Als nächstes wird der an das Distanzstück 28 und damit an das Lichtleitkabel 18 angekoppelte Beleuchtungskopf 46 in den Einsatz geschoben, bis eine distale Anlagefläche 74 der Kopplungshülse 50 gegen eine proximale Anlagefläche 76 des Einsatzes 36 zu liegen kommt. Dabei wird auch das distale Ende 35 des Distanzstückes 28 in den Einsatz 36 geschoben. Danach wird das Befestigungselement 34 in Form der Überwurfmutter mit dem Gewinde 38 des Einsatzes 36 verschraubt, wodurch das Distanzstück 28 an dem Einsatz 36 fixiert wird. Die gesamte Anordnung aus Distanzstück 28 und Beleuchtungskopf 46 ist nun an dem Einsatz 36 fixiert, der wiederum in der Öffnung 70 in der Wand 16 des Beobachtungsraumes 12 fixiert ist. Der Stecker 20 wird mit der Lichtquelle verbunden, wonach der Beobachtungsraum 12 durch das aus der Schliffläche 64 austretende Licht ausgeleuchtet wird. Es kann aber nicht nur Licht in den Beobachtungsraum 12 zugeführt, sondern auch Licht aus diesem von dem Lichtleitstab 48 aufgenommen werden und nach proximal geleitet werden, das dann spektroskopisch analysiert werden kann.

Das Distanzstück 28 ist bezüglich seiner Länge so bemessen, daß das Befestigungselement 34 von an der Wand 16 des Beobachtungsraumes 12 vorhandenen Bauteilen 78 genügend weit beabstandet ist, so daß sich das Befestigungselement 34 zur Befestigung des Distanzstückes 28 an dem Einsatz 36 bequem bedienen läßt.

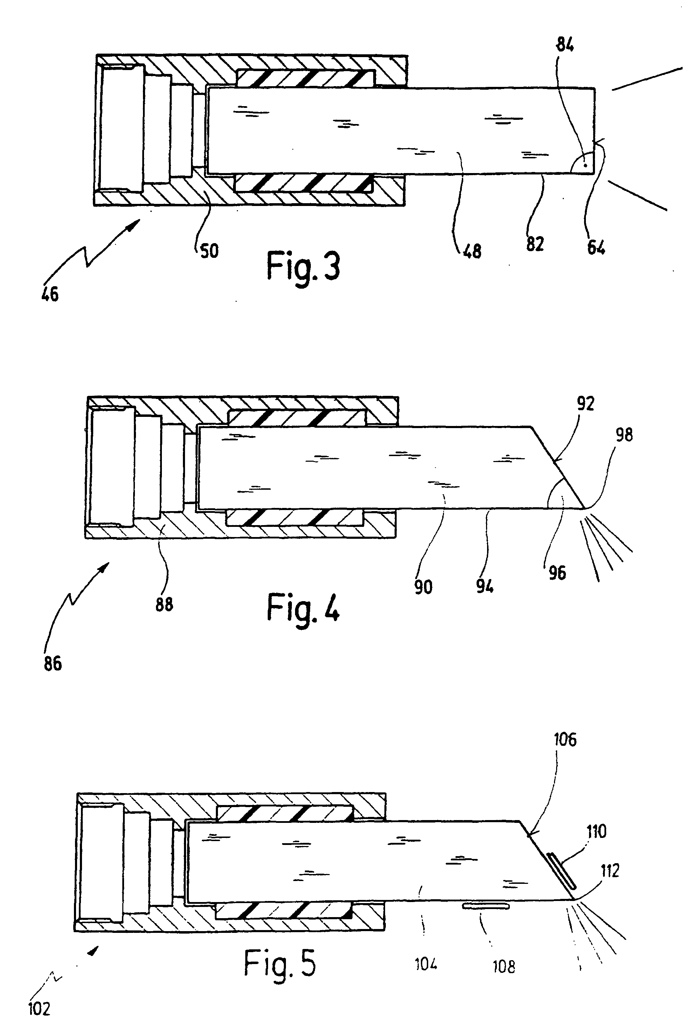

In Fig. 3 ist der Beleuchtungskopf 46 in Alleinstellung dargestellt. Die distale Schliffläche 64 des Lichtleitstabes 48 ist, wie bereits erwähnt, plan ausgebildet und bildet mit einer Mantellinie 82 des Lichtleitstabes 48 einen Scheitelwinkel 84 von 90°. Bei einer derartigen Ausgestaltung der Schliffläche 64 tritt das Licht aus der Schliffläche 64 in Längsrichtung des Lichtleitstabes 48 mit einem Öffnungswinkel von etwa 60° aus. Die Lichtaustrittsfläche ist dabei gleich der Schliffläche 64.

In Fig. 4 ist ein weiteres Ausführungsbeispiel eines Beleuchtungskopfes 86 dargestellt, wobei der Beleuchtungskopf 86 im Austausch gegen den Beleuchtungskopf 46 in dem Beleuchtungssystem 10 verwendet wird. Dementsprechend ist eine Kopplungshülse 88 identisch mit der Kopplungshülse 50 des Beleuchtungskopfes 46 ausgebildet. Im Unterschied zu dem Lichtleitstab 48 des Beleuchtungskopfes 46 weist der Beleuchtungskopf 86 einen Lichtleitstab 90 auf, dessen distale Schliffläche 92 mit einer Mantellinie 94 des Lichtleitstabes 90 einen Scheitelwinkel 96 von weniger als 90° bildet. Der Scheitelwinkel 96 liegt im Bereich zwischen 20° und 90°. Mit einem derartigen Scheitelwinkel wird ein nahezu punktförmiger Austritt des Lichtes aus dem Scheitel 98 der Schliffläche 92 erreicht, und zwar schräg zur Längsrichtung des Lichtleitstabes 90.

In Fig. 5 ist schließlich ein weiterer Beleuchtungskopf 102 dargestellt, dessen Lichtleitstab 104 ebenfalls eine schräg verlaufende Schliffläche 106 aufweist, wobei zusätzlich an der Oberfläche des Lichtleitstabes 104 Metallisierungen 108 und 110 aufgetragen sind. Die Metallisierungen 108 und 110 bestehen aus einem temperaturbeständigen Metall. Diese Metallisierungen 108 und 110 wirken als Spiegel, an denen das in dem Lichtleitstab 104 geleitete Licht reflektiert wird, wodurch ebenfalls eine Auskopplung des Lichts aus dem distalen Ende des Lichtleitstabes 104 schräg zur Längsrichtung bewirkt wird.

## Patentansprüche

1. Beleuchtungssystem zur Ausleuchtung eines Beobachtungsraums (12), insbesondere eines Beobachtungsraums (12), in dem ein unter hohem Druck stehendes und/oder heißes Medium (14) vorhanden ist, mit einem mit einem Ende an eine Lichtquelle anschließbaren Lichtleitkabel (18) und mit einem mit dem anderen Ende des Lichtleitkabels (18) verbundenen Beleuchtungskopf (46; 86; 102), dessen distales Ende durch eine Öffnung (70) in einer den Beobachtungsraum (12) umgebenden Wand (16) in den Beobachtungsraum (12) einführbar ist, wobei der Beleuchtungskopf (46; 86; 102) einen Lichtleitstab (48; 90; 104) aus einem druck- und/oder temperaturbeständigen Material aufweist, wobei der Lichtleitstab (48; 90; 104) an einem proximalen Ende eine Kopplungshülse (50; 88) zum Verbinden des Lichtleitstabes (48; 90; 104) mit dem Lichtleitkabel (18) aufweist, wobei die Kopplungshülse (50; 88) an dem Lichtleitstab (48; 90; 104) mittels eines Klebstoffes (52) befestigt ist, wobei der Klebstoff (52) einen Brechungsindex aufweist, der kleiner ist als der Brechungsindex des Lichtleitstabes (48; 90; 104), und wobei der Klebstoff (52) zumindest in Nähe der Oberfläche des Lichtleitstabes (48; 90; 104) transparent ist.

2. Beleuchtungssystem nach Anspruch 1, wobei der Lichtleitstab (48; 90; 104) lösbar mit dem Lichtleitkabel (18) verbunden ist.

3. Beleuchtungssystem nach Anspruch 1 oder 2, wobei der Klebstoff (52) hochtemperaturbeständig ist.

4. Beleuchtungssystem nach einem der Ansprüche 1 bis 3, wobei der Klebstoff (52) auf der Basis von Silikon aufgebaut ist.

5. Beleuchtungssystem nach einem der Ansprüche 1 bis 4, wobei die Kopplungshülse (50; 88) den Lichtleitstab bis etwa zum distalen Ende desselben umgibt.

6. Beleuchtungssystem nach einem der Ansprüche 1 bis 5, wobei in der Kopplungshülse (50; 88) eine Auflagefläche (60) ausgebildet ist, an der sich das proximale Ende des Lichtleitstabes (48; 90; 104) in axialer Richtung abstützt.

7. Beleuchtungssystem nach einem der Ansprüche 1 bis 6, wobei der Lichtleitstab (104) zumindest teilweise an seiner Oberfläche metallisiert ist.

8. Beleuchtungssystem nach Anspruch 7, wobei die Metallisierung (108, 110) aus einem Metall gebildet wird, das hochtemperaturbeständig ist, und/oder daß die Metallisierung (108, 110) mit einer Schutzschicht überzogen ist.

9. Beleuchtungssystem nach einem der Ansprüche 1 bis 8, wobei der Lichtleitstab (48; 90; 104) am distalen Ende eine plane oder gekrümmte Schliffläche (64; 92; 106) aufweist.

10. Beleuchtungssystem nach Anspruch 9, wobei die Schliffläche (64; 92; 106) plan ist und mit einer Mantellinie (82; 94) des Lichtleitstabes (48; 90; 104) einen Scheitelwinkel (84; 96) im Bereich zwischen 20 und 90 Grad bildet.

11. Beleuchtungssystem nach einem der Ansprüche 1 bis 10, wobei der Lichtleitstab (48; 90; 104) aus einem thermisch isolierenden Material besteht.

12. Beleuchtungssystem nach einem der Ansprüche 1 bis 11, wobei der Lichtleitstab (48; 90; 104) aus Quarzglas besteht.

13. Beleuchtungssystem nach einem der Ansprüche 1 bis 12, wobei zwischen dem Beleuchtungskopf (46; 86; 102) und dem Lichtleitkabel (18) ein starres, als Schaft ausgebildetes Distanzstück (28) angeordnet ist, wobei der Lichtleitstab (48; 90; 104) lösbar an dem Distanzstück (28) fixiert ist.

14. Beleuchtungssystem nach Anspruch 13, wobei ein Einsatz (36) vorgesehen ist, der außerhalb des Beobachtungsraums (12) in der Öffnung (70) in der Wand (16) des Beobachtungsraums (12) fixiert werden kann, wobei das Distanzstück (28) in den Einsatz (36) einschiebbar ist und mit einem Befestigungselement (34) am proximalen Ende des Einsatzes (36) fixierbar ist.

15. Beleuchtungssystem nach Anspruch 14, wobei das Befestigungselement (34) an dem Distanzstück (28) unverlierbar gehalten ist.

16. Beleuchtungssystem nach Anspruch 14 oder 15, wobei das Befestigungselement (34) eine Überwurfmutter oder ein Bajonettring ist.

17. Beleuchtungssystem nach einem der Ansprüche 13 bis 16, wobei die Kopplungshülse (50) mit dem distalen Ende (35) des Distanzstückes (28) verschraubbar ist.

18. Beleuchtungssystem nach einem der Ansprüche 1 bis 17, wobei es zur spektroskopischen Auskopplung von Licht aus dem Beobachtungsraum (12) ausgelegt ist.

19. verwendung eines Beleuchtungssystems nach einem der Ansprüche 1 bis 19 zur Ausleuchtung eines Brennraumes eines Verbrennungsmotors und/oder zur spektroskopischen Auskopplung von Licht aus demselben.

20. Verwendung eines Beleuchtungssystems nach einem der Ansprüche 1 bis 18 zur Ausleuchtung eines Reaktionsgefäßes inder chemischen Industrie und/oder zur Auskopplung von Licht aus demselben.

21. Verwendung eines Beleuchtungssystems nach einem der Ansprüche 1 bis 18 zur Ausleuchtung eines Reaktors eines Kernkraftwerkes.

## Claims

1. A lighting system for illumination of an observation space (12), especially an observation space (12) in which a pressurized and/or hot medium (14) is present, comprising an optical-fiber cable (18), one end of which can be connected to a light source, and a lighting head (46; 86; 102), which is connected to the other end of the optical-fiber cable (18) and whose distal end can be introduced into the observation space (12) through an opening (70) in a wall (16) enclosing the observation space (12), wherein the lighting head (46; 86; 102) comprises a light guide rod (48; 90; 104) made from a pressure and/or temperature-resistant material, wherein the light guide rod (48; 90; 104) comprises at a proximal end a coupling sleeve (50; 88) for connecting the light guide rod (48; 90; 104) with the optical-fiber cable (18), wherein the coupling sleeve (50; 88) is fixed to the light guide rod (48; 90; 103) by means of an adhesive (52), the adhesive (52) having a refractive index (52) being smaller than the refractive index of the light guide rod (48; 90; 104), and wherein the adhesive (52) is transparent at least in the area near the surface of the light guide rod (48; 90; 104).

2. The lighting system of Claim 1, wherein the light guide rod (48; 90; 104) is detachably connected to the optical-fiber cable (18).

3. The lighting system of Claim 1 or 2, wherein the adhesive (52) is resistant to high temperatures.

4. The lighting system of anyone of Claims 1 through 3, wherein the adhesive (52) is formulated on a silicone basis.

5. The lighting system of anyone of Claims 1 through 4, wherein the coupling sleeve (50; 88) encloses the light guide rod up to approximately the distal end thereof.

6. The lighting system of anyone of Claims 1 through 5, wherein an abutment surface (60), at which the proximal end of the light guide rod (48; 90; 104) abuts in axial direction, is formed in the coupling sleeve (50; 88).

7. The lighting system of anyone of Claims 1 through 6, wherein the light guide rod ( 104) is metallized on at least part of its surface.

8. The lighting system of Claim 7, wherein the metallization (108, 110) is formed from a metal that is resistant to high temperatures and/or wherein the metallization (108, 110) is covered by a protective coating.

9. The lighting system of anyone of Claims 1 through 8, wherein the light guide rod (48; 90; 104) has a plane or curved ground surface (64; 92; 106) at its distal end.

10. The lighting system of Claim 9, wherein the ground surface (64; 92; 106) is plane and forms with a surface line (82; 94) of the light guide rod (48; 90; 104) a vertex angle in the range of between 20 and 90 degrees.

11. The lighting system of anyone of Claims 1 through 10, wherein the light guide rod (48; 90; 104) is made from a heat-insulating material.

12. The lighting system of anyone of Claims 1 through 11, wherein the light,guide rod (48; 90; 104) is made from quartz glass.

13. The lighting system of anyone of Claims 1 through 12, wherein a rigid spacer (28) in the form of a shaft is arranged between the lighting head (46; 86; 102) and the optical-fiber cable (18), the light guide rod (48; 90; 104) being detachably fixed with the spacer (28).

14. The lighting system of Claim 13, wherein an insert (36) is provided that can be fixed in the opening (70) in the wall (16) of the observation space (12) outside the latter, wherein the spacer (28) can be slid into the insert (36) and can be fixed at the proximal end of the latter by means of a mounting element (34).

15. The lighting system of Claim 14, wherein the mounting element (34) is held on the spacer (28) in loss-proof fashion.

16. The lighting system of Claim 14 or 15, wherein the mounting element (34) is a cap nut or a bayonet ring.

17. The lighting system of anyone of Claims 13 through 16, wherein the coupling sleeve (50) and the distal end (35) of the spacer (28) can be connected by screwing.

18. The lighting system of anyone of Claims 1 through 17, wherein the lighting system is designed for spectroscopically coupling-out light from the observation space (12).

19. Use of a lighting system of anyone of Claims 1 through 18 for illuminating a combustion chamber of a combustion engine and/or for spectroscopically coupling-out light from the combustion chamber.

20. Use of a lighting system of anyone of Claims 1 through 18 for illuminating a reaction chamber in chemical industry and/or for coupling out light from such a chamber.

21. Use of a lighting system of anyone of Claims 1 through 18 for illuminating a reactor of a nuclear power station.

## Revendications

1. Système d'éclairage pour éclairer un espace d'observation (12), en particulier un espace d'observation (12) dans lequel se trouve un fluide (14) sous haute pression et/ou chaud, avec un câble optique (18) pouvant se raccorder par une extrémité à une source de lumière et avec une tête d'éclairage (46 ; 86 ; 102) reliée à l'autre extrémité du câble optique (18), tête dont l'extrémité distale peut être introduite dans l'espace d'observation (12) à travers une ouverture (70) dans une paroi (16) entourant l'espace d'observation (12), la tête d'éclairage (46 ; 86 ; 102) présentant un barreau conducteur optique (48 ; 90 ; 104) composé d'un matériau résistant à la pression et/ou à la température, le barreau conducteur optique (48 ; 90 ; 104) présentant à une extrémité proximale une douille de couplage (50 ; 88) pour relier le barreau conducteur optique (48 ; 90 ; 104) au câble optique (18), la douille de couplage (50 ; 88) étant fixée au barreau conducteur optique (48 ; 90 ; 104) au moyen d'un adhésif (52), l'adhésif (52) présentant un indice de réfraction qui est inférieur à l'indice de réfraction du barreau conducteur (48 ; 90 ; 104); et l'adhésif (52) étant transparent au moins au voisinage de la surface du barreau conducteur optique (48 ; 90 ; 104).

2. Système d'éclairage selon la revendication 1, dans lequel le barreau conducteur optique (48 ; 90 ; 104) est relié de manière amovible au câble optique (18).

3. Système d'éclairage selon la revendication 1 ou 2, dans lequel l'adhésif (52) possède une grande résistance à la température.

4. Système d'éclairage selon l'une des revendications 1 à 3, dans lequel l'adhésif (52) est à base de silicone.

5. Système d'éclairage selon l'une des revendications 1 à 4, dans lequel la douille de couplage (50 ; 88) entoure le barreau conducteur optique approximativement jusqu'à l'extrémité distale de celui-ci.

6. Système d'éclairage selon l'une des revendications 1 à 5, dans lequel une surface d'appui (60) est formée dans la douille de couplage (50 ; 88), surface contre laquelle l'extrémité proximale du barreau conducteur optique (48 ; 80 ; 104) s'appuie dans la direction axiale.

7. Système d'éclairage selon l'une des revendications 1 à 6, dans lequel le barreau conducteur optique (104) est au moins partiellement métallisé sur sa surface.

8. Système d'éclairage selon la revendication 7, dans lequel la métallisation (108, 110) est formée d'un métal qui présente une grande résistance à la température, et/ou dans lequel la métallisation (108, 110) est recouverte d'une couche protectrice.

9. Système d'éclairage selon l'une des revendications 1 à 8, dans lequel le barreau conducteur optique (48 ; 90 ; 104) présente à l'extrémité distale une surface poncée plane ou courbe (64 ; 92 ; 106).

10. Système d'éclairage selon la revendication 9, dans lequel la surface poncée (64 ; 92 ; 106) est plane et forme avec une ligne génératrice (82 ; 94) du barreau conducteur optique (48 ; 90 ; 104) un angle au sommet (84 ; 96) compris entre 20 et 90 degrés.

11. Système d'éclairage selon l'une des revendications 1 à 10, dans lequel le barreau conducteur optique (48 ; 90 ; 104) est composé d'un matériau isolant thermique.

12. Système d'éclairage selon l'une des revendications 1 à 11, dans lequel le barreau conducteur optique (48 ; 90 ; 104) est composé de verre quartzeux.

13. Système d'éclairage selon l'une des revendications 1 à 12, dans lequel une pièce d'écartement (28) rigide, conformée en tige est placée entre la tête d'éclairage (46 ; 86 ; 102) et le câble optique (18), le barreau conducteur optique (48 ; 90 ; 104) étant fixé de manière amovible sur la pièce d'écartement (28).

14. Système d'éclairage selon la revendication 13, dans lequel un insert (36) est prévu, qui peut être fixé dans l'ouverture (70) de la paroi (16) de l'espace d'observation (12) à l'extérieur de l'espace d'observation (12), la pièce d'écartement (28) pouvant être enfoncée dans l'insert (36) et pouvant être fixée par un élément de fixation (34) sur l'extrémité proximale de l'insert (36).

15. Système d'éclairage selon la revendication 14, dans lequel l'élément de fixation (34) est retenu de manière inamovible sur la pièce d'écartement (28).

16. Système d'éclairage selon la revendication 14 ou 15, dans lequel l'élément de fixation (34) est un écrou-raccord ou une bague à baïonnette.

17. Système d'éclairage selon l'une des revendications 13 à 16, dans lequel la douille de couplage (50) peut être vissée à l'extrémité distale (35) de la pièce d'écartement (28).

18. Système d'éclairage selon l'une des revendications 1 à 17, ce système étant conçu pour le découplage spectroscopique de la lumière provenant de l'espace d'observation (12).

19. Utilisation d'un système d'éclairage selon l'une des revendications 1 à 18 pour éclairer une chambre de combustion d'un moteur à combustion et/ou pour le découplage spectroscopique de la lumière provenant de celle-ci.

20. Utilisation d'un système d'éclairage selon l'une des revendications 1 à 18 pour éclairer une cuve de réaction dans l'industrie chimique et/ou pour le découplage spectroscopique de la lumière provenant de celle-ci.

21. Utilisation d'un système d'éclairage selon l'une des revendications 1 à 18 pour éclairer un réacteur d'une centrale nucléaire.
